# EUROPÄISCHE PATENTANMELDUNG

(11) **EP 1 544 037 A2**
(43) Veröffentlichungstag der Anmeldung: **22.06.2005**
(21) Anmeldenummer: 04025467.4
(22) Anmeldetag: 27.10.2004
(51) Int. Cl.: B60Q 3/04

(54) **Funktionsanzeigenbeleuchtungsvorrichtung**

(30) Priorität: 19.12.2003 DE 10360896
(71) Anmelder: ROBERT BOSCH GMBH, 70442 Stuttgart (DE)
(72) Erfinder: Kimmich, Peter, 71101 Schoeneich (DE)

(57) **Zusammenfassung**

Die Erfindung betrifft eine Funktionsanzeigenbeleuchtungsvorrichtung, insbesondere für ein Bedienelement einer Klimaanlage eines Kraftfahrzeuges, mit mindestens einer Lichtquelle (12) sowie einer Mehrzahl von Lichtleitelementen (20,26), die jeweils einen Lichteintrittbereich (38) und einen Lichtaustrittsbereich (32) aufweisen und das Licht der mindestens einen Lichtquelle (12) einem von der jeweiligen Lichtquelle beabstandeten Funktionsanzeigeort zuführen.

Erfindungsgemäß wird vorgeschlagen, dass die Lichtleitelemente (20,26) mechanisch miteinander verbunden sind.

## Beschreibung

Die Erfindung betrifft eine Funktionsanzeigenbeleuchtungsvorrichtung nach dem Oberbegriff des unabhängigen Anspruchs.

### Stand der Technik

Um bei einem Mehrfachschalter, wie beispielsweise einem Drehschalter, die ausgewählte Einstellung einem Nutzer gegenüber zu verdeutlichen, ist es aus dem Stand der Technik bekannt, zur Funktionsanzeige der Dreheinstellung beispielsweise konzentrisch angeordnete Funktionsanzeigepunkte je nach gewählter Einstellung zu beleuchten. Ein solches System findet beispielsweise Verwendung bei Klimabediengeräten in Kraftfahrzeugen.

Diese Funktionsanzeigepunkte, deren Gestalt beliebig ist und deren Anzahl n zumeist den auswählbaren Funktionen entspricht, sind einzelne, getrennte Lichtquellen, beispielsweise in Form von einzelnen LEDs zugeordnet, die ein entsprechendes Funktionssymbol beispielsweise hinterleuchten. Die Zuordnung einer einzelnen separaten Lichtquelle zu jedem Funktionsanzeigenpunkt hat darüber hinaus den Vorteil, dass ein Überstrahlen des Lichtes zu einem benachbart angeordneten Funktionsanzeigenpunkt verhindert werden kann. Dazu sind die einzelnen Lichtquellen zumeist in getrennten Kammern angeordnet, die jeweils einen Lichtkanal von der Lichtquelle zum Funktionsanzeigepunkt der Bedienoberfläche herstellen.

Um die Sichtbarkeit des beleuchteten Funktionsanzeigepunktes über einen großen Betrachtungswinkel sicher zu stellen (Fahrer- Beifahrernutzung) und darüber hinaus auch eine ausreichende Helligkeit der Hinterleuchtung zu garantieren können jedem Funktionsanzeigepunkt Prismen zur Lichtleitung zugeordnet sein.

### Vorteile der Erfindung

Die erfindungsgemäß Funktionsanzeigenbeleuchtungsvorrichtung besitzt zumindest eine Lichtquelle sowie eine Mehrzahl Lichtleitelementen, die das Licht der Lichtquelle jeweils einem von der Lichtquelle beabstandeten Funktionsanzeigeort zuführen, wobei die Lichtleitelemente miteinander mechanisch verbunden sind. Auf diese Weise ist es möglich, die notwendige Teileanzahl einer solchen Funktionsanzeigenbeleuchtungsvorrichtung herabzusetzen und somit zu einer Verminderung der Montage- und Handlingskosten bzw. der dazu benötigten Zeit beizutragen. Insbesondere ist es vorteilhaft, die einzelnen Lichtleitelemente nicht einzeln montieren zu müssen.

Die Vielzahl von Lichtleitelementen innerhalb der Funktionsanzeigenbeleuchtungsvorrichtung können bei geeigneter Gestaltung derart miteinander verbunden sein, dass lediglich eine lichttechnische Trennung zwischen den einzelnen Lichtleitelementen erfolgt, die ein minimales Übersprechen eines Lichtleitelementes auf ein beabstandetes Lichtleitelement ermöglicht. Auf diese Weise ist es möglich, das Licht einer einzelnen Lichtquelle, beispielsweise einer ringförmigen Lichtquelle über die Lichtleitelemente an einzelne, diskrete Funktionsorte zu führen.

Insbesondere erlaubt die erfindungsgemäße Funktionsanzeigenbeleuchtungsvorrichtung die Ausbildung eines Mehrfachschalters, wie er beispielsweisein Form eines Drehschalters bei Bedienelementen von Klimaanlagen in Kraftfahrzeugen Verwendung findet. Dieser Drehschalter kann dann durch die erfindungsgemäße Vorrichtung beispielsweise in der Art eines hinterleuchteten Lichtkranzes beleuchtet werden.

Durch die in den abhängigen Ansprüchen aufgeführten Merkmale sind vorteilhafte Weiterbildungen und Verbesserungen der erfindungsgemäßen Vorrichtung gemäß Anspruch 1 möglich.

In einer Ausführungsform der erfindungsgemäßen Vorrichtung ist jedem Lichtleitelement eine Lichtquelle zugeordnet. Das Lichtleitelement führt das Licht der jeweiligen, zugeordneten Lichtquelle an einen von der Lichtquelle beabstandeten Funktionsort. Somit lassen sich beispielsweise die diversen Einstellungen eines Drehschalters visualisieren, indem das aus dem Lichtleitelement wieder austretende Licht eine Signatur hinterleuchtet, die die gewählte Einstellung des Schalters wiedergibt.

In vorteilhafter Weise können die Lichtleitelemente der Funktionsanzeigenbeleuchtungsvorrichtung einstückig miteinander verbunden sein. So können diese Elemente beispielsweise aus einem einzelnen Werkstoff hergestellt und somit als ein Stück montiert werden.

Insbesondere ist es möglich, die Funktionsanzeigenbeleuchtungsvorrichtung derart auszubilden, dass zwischen jeweils zwei Lichtleitelementen ein Abstandselement vorgesehen ist, welches nicht der Lichtleitung dient. Auf diese Weise ist es möglich, einzelne, diskrete Funktionsanzeigeorte zu realisieren, obwohl die Lichtleitfunktion von lediglich einem einstückigen Bauteil realisiert wird.

In einer vorteilhaften Ausgestaltung der erfindungsgemäßen Funktionsanzeigenbeleuchtungsvorrichtung bestehen Lichtleitelemente und Abstandselemente aus unterschiedlichen Werkstoffen. Dabei kann als Werkstoff für die Abstandselemente beispielsweise ein lichtundurchlässiger Werkstoff gewählt werden, so dass ein Übersprechen eines Lichtleitelementes auf ein zweites, beabstandetes Lichtleitelement zuverlässig verhindert werden kann. So ist es möglich, die Vielzahl der in einer solchen Funktionsanzeigenbeleuchtungsvorrichtung vorgesehenen Lichtleitelemente in einem einzigen Werkstück zu fertigen, welches beispielsweise aus zwei Werkstoffen, jedoch in einem Werkzeug spritztechnisch hergestellt werden kann. Die Lichtabschottung im Bereich der Abstandselemente kann durch einen "schwarzen" Werkstoff, d.h. einen lichtundurchlässigen Werkstoff, realisiert werden. Zudem können zusätzlich mechanische Komponenten, wie beispielsweise ein Lichtlabyrinth zur Lichtabschottung vorgesehen sein.

In einer weiteren vorteilhaften Ausgestaltung der erfindungsgemäßen Funktionsanzeigenbeleuchtungsvorrichtung können die Abstandselemente ebenfalls miteinander verbunden sein. So können die Abstandselemente derart ausgebildet sein, dass sie zu einem einzelnen, beispielsweise ringförmigen Bauteil aus einem lichtundurchlässigen Werkstoff ausgebildet sind.

In vorteilhafter Weise sind die Lichtleitelemente als transparente Funktionsprismen ausgebildet, die einen Lichttransport des Lichtes der zugehörigen Lichtquellen an den vorgesehenen Funktionsanzeigeort gewährleisten. Dabei können die Lichteintrittsflächen der Funktionsprismen vorteilhafter Weise nahezu parallel zur Bezugsebene der zugeordneten Lichtquellen verlaufen, und sollten eine derartige Größe besitzen, dass sicher gestellt ist, dass eine nahezu komplette Lichteinleitung in die Funktionsprismen erfolgt.

Die Funktionsprismen sind in ihrer Form derart ausgestaltet, dass Licht mittels optischer Totalreflexion durch das Funktionsprisma hindurch zu einem Lichtaustrittsbereich des Funktionsprismas geführt wird, ohne dass das Licht an anderen Stellen aus dem Lichtleitelement merklich austreten kann. Insbesondere ist es möglich, die Funktionsprismen geometrisch derart auszugestalten, dass ein Übertreten von in ein erstes Funktionsprisma eingekoppeltes Licht in ein anderes Funktionsprisma verhindert wird. Auf diese Weise ist es möglich, die einstückig, aus einem Werkstoff hergestellte Mehrzahl von Lichtleitelementen derart auszubilden, dass ein Übersprechen der einzelnen Lichtleitelemente zuverlässig verhindert wird.

Um die Sichtbarkeit der zugeordneten Funktionsanzeige über einen großen Betrachtungswinkel sicher zu stellen, kann vorgesehen sein, dass der typischerweise im Bereich des Funktionsanzeigeortes ausgebildete Lichtaustritt der Funktionsprismen derart gestaltet ist, dass der Lichtaustritt streuend erfolgt. Dies lässt sich beispielsweise durch eine entsprechende Behandlung bzw. Strukturgebung der Lichtaustrittsfläche der Funktionsprismen realisieren.

Insbesondere können die Funktionsprismen derart ausgebildet und angeordnet sein, dass sie bzw. die zugehörigen Lichtaustrittsbereiche eine geschlossene Umfangskontur diskreter Anzeigepunkte bzw. Flächen erzeugen, die ein entsprechendes Bedienelement beispielsweise umrahmen. Die Lichtaustrittsbereiche können dabei verschiedene Formen, wie beispielsweise punktförmig, gerade, oder mehreckig sein. Das jeweilige Funktionsprisma ist mit seinem Lichtaustrittbereich lediglich in eine solche Form zu bringen, bzw. mit einer entsprechenden Blende zu versehen.

Weitere Vorteile der erfindungsgemäßen Funktionsanzeigenbeleuchtungsvorrichtung sind in der nachfolgenden Zeichnung sowie in der dazugehörigen Beschreibung offenbart.

### Zeichnung

In der Zeichnung ist ein Ausführungsbeispiel der erfindungsgemäßen Funktionsanzeigenbeleuchtungsvorrichtung dargestellt, welches in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die somit als ebenfalls in diesem Text offenbart anzusehen sind.

Es zeigt:
- Figur 1: einen perspektivischen Ausschnitt in Explosionsdarstellung einer erfindungsgemäßen Funktionsanzeigenbeleuchtungsvorrichtung,
- Figur 2: eine Schnittzeichnung durch den in Figur 1 dargestellten Ausschnitt in zusammengesetztem Zustand.

### Beschreibung eines Ausführungsbeispiels

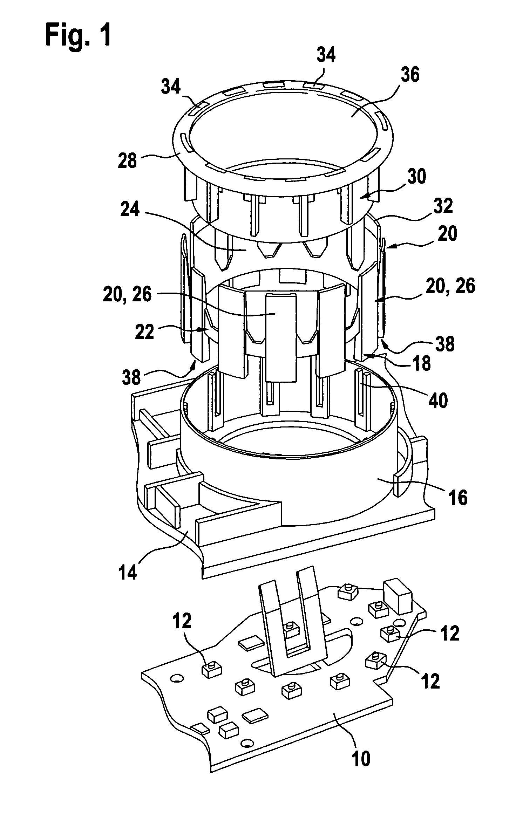

Figur 1 zeigt in einer Explosionsdarstellung die wesentlichen Teile der erfindungsgemäßen Funktionsanzeigenbeleuchtungsvorrichtung, wie sie beispielsweise zur Funktionsanzeige einer Dreheinstellung, d.h. eines Drehringes oder Drehknopfes bei Klimabediengeräten in Kraftfahrzeugen zur Verwendung kommt. Bei dieser Art der Funktionsanzeige werden konzentrisch angeordnete Funktionsanzeigepunkte beliebiger Gestalt je nach Einstellung des Schalterelementes beleuchtet. Eine solche Vorrichtung kann jedoch auch lediglich zu einer Beleuchtung eines Schalterelementes dienen.

Die Vorrichtung weist einen Schaltungsträger in Form einer Platine 10 auf, auf der neben weiteren elektronischen Bauelementen eine Mehrzahl von LEDs 12 auf dem Umfang eines Kreises angeordnet sind. Neben den in diesem Ausführungsbeispiel verwendeten LEDs lassen sich prinzipiell auch andere Lichtquellen, wie beispielsweise Laserdioden oder Glasfaseraustrittspunkte verwenden. Auch ist die kreisförmige Anordnung der Lichtquellen 12 im Ausführungsbeispiel der erfindungsgemäßen Vorrichtung gemäß Figur 1 nur als ein mögliches Beispiel zur Verdeutlichung der der Erfindung zu Grunde liegenden Idee aufzufassen. Die Anordnung der Lichtquellen könnte ebenso in Form eines Ovals, einer Ellipse, eines Rechteckes oder anderer geometrischer Figuren erfolgen. Prinzipiell ist auch eine einzelne Lichtquelle in einer der oben genannten Formen zur Beleuchtung vom Lichtleitelementen möglich.

Auf die Platine aufgesetzt wird eine Trägerkonstruktion 14, die eine Aufnahme 16 aufweist, die die Lichtquellen 12 auf der Platine 10 im zusammengebautem Zustand der erfindungsgemäßen Vorrichtung umgibt. In die Aufnahme 16 eingesetzt wird wiederum ein Funktionsanzeigenbeleuchtungskranz 18, der aus einer Mehrzahl von Funktionsprismen 20 gebildet wird. Die Funktionsprismen 20 bilden Lichtleitelemente 26 und sind durch Verbindungselemente, die gleichzeitig als Abstandselemente 22zwischen den Lichtleitelementen dienen, mechanisch miteinander verbunden. Im Ausführungsbeispiel der Figur 1 werden die Abstandselemente 22 durch einen einzelnen Ring 24 gebildet, auf den die Lichtleitelemente in Form der Funktionsprismen 20 aufgebracht sind. In vorteilhafter Weise ist der die Abstandselemente 22 bildende Ring 24 aus einem lichtundurchlässigen Werkstoff gefertigt. Die Funktionsprismen 20, die als Lichtleitelemente 26 dienen, sind hingegen lichtdurchlässig ausgebildet.

Im eingebauten Zustand sind die Aufnahme 16, der Funktionsanzeigenbeleuchtungskranz 18 sowie die Blende 28 konzentrisch ineinander angeordnet. In die zentrale Öffnung 36 dieser Anordnung ist ein Schalterelement in Form eines Drehknopfes einsetzbar.

Der gesamte Funktionsanzeigenbeleuchtungskranz 18, bestehend aus den lichtleitenden Funktionsprismen 20 und den Abstandselementen 22 kann beispielsweise in einem Werkzeug spritztechnisch aus zwei Werkstoffen hergestellt werden. Dabei ist der eine Werkstoff (Abstandselemente), wie bereits beschrieben, lichtundurchlässig, der andere Werkstoff (Funktionsprismen) lichtleitend zu wählen.

Auf den Funktionsanzeigenbeleuchtungskranz 18 wird eine Blende 28 aufgesetzt, die zum einen der mechanischen Stabilisierung des Funktionsanzeigenbeleuchtungskranzes 18, und zum anderen der Lichtabschottung zwischen den einzelnen Funktionsprismen 20 dient. Dazu weist die Blende 28 beispielsweise in radialer Richtung angeordnete Stege 30 auf, die im eingebauten Zustand zwischen den lichtleitenden Funktionsprismen 20 zu liegen kommen und somit ein optisches Übersprechen zwischen den einzelnen Funktionsprismen verhindern.

Die radialen Stege 30, die auf der Außenseite der Blende 28 angeordnet sind, greifen dabei in Aufnahmen 40 ein, die auf der Innenseite der Funktionsanzeigenbeleuchtungskranzaufnahme 16 ausgebildet sind. Damit wird der Funktionsanzeigenbeleuchtungskranz 18 zwischen der Blende 28 und der Aufnahme 16 der Trägerkonstruktion 14 fixiert. In vorteilhafter Weise können dabei die Aufnahmen 40 für die Stege 30 derart ausgestaltet sein, dass sich ein Lichtabschottungslabyrinth zwischen den Funktionsprismen 20 ergibt. Auf diese Weise kann gewährleistet werden, dass das in ein Funktionsprisma 20 eintretende Licht auch nur an dessen vorgesehener Lichtaustrittsfläche wieder austritt, so dass ein Aufleuchten der optischen Funktionsanzeige eindeutig zurückzuführen ist auf die Aktivität der dem Funktionspunkt zugeordneten Lichtquelle. Zur besseren Sichtbarkeit und Eindeutigkeit der Darstellung ist ein optisches Übersprechen zwischen den einzelnen Funktionsprismen so weit wie irgend möglich zu vermeiden.

Im eingebauten Zustand greifen die Lichtaustrittsflächen 32 der Funktionsprismen 20 durch entsprechend ausgebildete Öffnungen 34 in der Blende 28 hindurch und bilden einen Kranz, der auf einer geschlossenen Umfangskontur einzelne diskrete Lichtpunkte bzw. Lichtzeichen aufweist und beispielsweise einen Drehschalter umgibt. Neben der in Figur 1 dargestellten Form der Lichtaustrittflächen 32 der Funktionsprismen 20, kann die Austrittsfläche je nach Erfordernis jede beliebige Form und Signatur aufweisen.

Der Funktionsanzeigenbeleuchtungskranz 18 besitzt im Ausführungsbeispiel gemäß Figur 1 zwölf Funktionsprismen, die mit ihrer jeweiligen Lichteintrittsfläche 38 über den Lichtquellen 12 angeordnet sind. Die Lichteintrittsflächen 38 sind derart ausgestaltet, dass das Licht einer Lichtquelle 12 nahezu vollständig über die Lichteintrittsfläche 38 des zugeordneten Funktionsprismas 20 aufgenommen wird. Dazu sind die Eintrittsflächen nahezu parallel zur Ebene der Lichtquellen ausgebildet. Ein kleiner Winkel zwischen der Ebene der Lichteintrittsflächen und der Ebene der Lichtquellen ist vorteilhaft, um ein Rückspiegeln des Lichtes von der Oberfläche der Lichteintrittsflächen auf die Lichtquellen zu verhindern. Die Lichtstrahlen werden mittels optischer Totalreflektion im Funktionsprisma gehalten und in Richtung auf die jeweilige Lichtaustrittsfläche 32 des Prismas geführt.

Die Lichtaustrittsflächen 32 der Funktionsprismen 20 sind derart ausgestaltet, dass der Lichtaustritt streuend erfolgt. Dazu kann beispielsweise die Lichtaustrittsfläche 32 mattiert oder strukturiert oder andersartig bearbeitet sein. Auf diese Weise ist es möglich, trotz der gerichteten Lichtführung innerhalb der Funktionsprismen 20 eine diffuse Beleuchtung am Funktionsanzeigeort, d.h. dem Funktionspunkt bzw. der Funktionsfläche der erfindungsgemäßen Vorrichtung zu erzielen. Diese diffuse Beleuchtung gewährleistet eine gleichmäßige Sichtbarkeit des Funktionspunktes aus allen Betrachtungsrichtungen, so dass die erzielte Beleuchtung beispielsweise sowohl für den Fahrer als auch den Beifahrer deutlich erkennbar ist.

Um ein optisches Übersprechen, d.h. ein Weiterleiten der Lichtstrahlen aus einem Funktionsprisma zu einem beabstandeten Funktionsprisma zu verhindern, sind die Abstandselemente 22 zwischen den Funktionsprismen beispielsweise aus einem lichtundurchlässigen Werkstoff gefertigt. Des weiteren ist es ebenso möglich, die Funktionsprismen 20 bzw. die Abstandselemente 22 geometrisch derart auszugestalten, dass ein Weiterleiten von Licht von einem Funktionsprisma über ein Abstandselement auf ein weiteres Funktionsprisma beispielsweise auch durch eine Totalreflexion des Lichtes an Flächen des Funktionsprismas bzw. des Abstandselementes verhindert wird. D.h. neben einem entsprechend gewählten Werkstoff kann die Lichtabschottung im Bereich der Verbindung zwischen den einzelnen Funktionsprismen 20 auch durch eine geeignete geometrische Gestaltung dieser Verbindung realisiert werden. Auch ist es möglich, die Abstandselemente im Bereich der Verbindung mit den Funktionsprismen spiegelnd auszubilden, so dass durch Rückspiegeln des Lichtes ein Weiterleiten der Lichtstrahlen von einem Funktionsprisma zum nächsten verhindert wird.

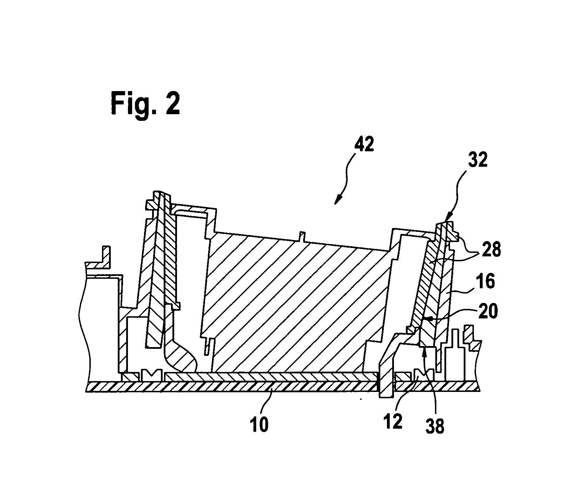

Figur 2 zeigt die Funktionsanzeigenbeleuchtungsvorrichtung gemäß Figur 1 im zusammengesetzten Zustand anhand einer Schnittdarstellung. Gemäß Figur 2 sind ineinander angeordnet die Aufnahme 16, der Kranz 18 der Funktionsprismen 20, die Blende 28, die den Funktionsanzeigenbeleuchtungskranz 18 umgreift sowie ein Teil 42 eines Drehschalters zur Auswahl verschiedener Funktionen des Bedienelementes. Das aus einer Lichtquelle in Form der LED 12 austretende Licht tritt über die Lichteintrittsfläche 38 eines zugeordneten Funktionsprismas 20 ein und wird durch dessen spezielle Gestalt in Richtung auf die Lichtaustrittsfläche 32 geleitet. Um das Licht der Lichtquelle 12 nahezu vollständig in das zugehörige Funktionsprisma 20 einzukoppeln, ist die Lichteintrittsfläche des Funktionsprismas im Wesentlichen parallel zur Aussendungsebene der LED angeordnet. In radialer Richtung kommt das Funktionsprisma zwischen der Blende 28 und der Aufnahme 16 zu liegen, die derart ineinander greifen, dass ein zusätzliches Lichtabschottungslabyrinth gebildet wird.

In bereits beschriebener Weise wird das optische Übersprechen zwischen den einzelnen Funktionsprismen in Umfangsrichtung durch die zwischengeschalteten Abstandselemente verhindert. Diese sind dazu beispielsweise in einem lichtundurchlässigen Material ausgefertigt. In anderen Ausführungsbeispielen kann durch eine entsprechende geometrische Formgebung der Funktionsprismen mittels optischer Totalreflexion verhindert werden, dass Licht von einem Funktionsprisma über das benachbarte Abstandselement zu einem weiteren Funktionsprisma gelangt.

In vorteilhafter Weise kann die Vielzahl von Funktionsprismen 20 der erfindungsgemäßen Vorrichtung aus einem Werkstoff hergestellt und somit in Form des Funktionsanzeigenbeleuchtungskranzes 18 auch als ein Stück montiert werden. Denkbar wäre es auch, den Funktionsanzeigenbeleuchtungskranz18 als ein Stück lediglich zu montieren und beim Zusammenfügen der gesamten Vorrichtung die Verbindung der einzelnen Funktionsprismen entweder durch ein Werkzeug oder durch geeignete Formgebung der Blende oder des Trägerteils zu durchtrennen.

Die erfindungsgemäße Vorrichtung ist nicht auf das in den Figuren gezeigte Ausführungsbeispiel beschränkt.

Insbesondere ist der Funktionsanzeigenbeleuchtungskranz nicht beschränkt auf eine kreisrunde Anordnung der Funktionsprismen bzw. der zugeordneten Lichtquellen. Neben einer runden Anordnung sind ebenso elliptische, ovale oder auch eckige Anordnungen möglich. Besonders vorteilhaft für die Lichtaustrittsflächen ist die Anordnung auf geschlossenen Umfangskonturen.

Auch muss die Kontur der Lichtaustrittsflächen nicht mit der Kontur der Lichtquellen übereinstimmen, da über die Funktionsprismen eine Lichtleitfunktion bewirkt wird, die es ermöglicht, Licht an den gewünschten Funktionsanzeigenort zu leiten. Insbesondere ist es auch möglich eine einzelne, beispielsweise ringförmige Lichtquelle zu benutzen, deren Licht erst durch die Mehrzahl von Funktionsprismen aufgeteilt und an verschiedene Funktionsanzeigenorte geleitet wird.

Die erfindungsgemäße Funktionsanzeigenbeleuchtungsvorrichtung ist ebenfalls nicht beschränkt auf die Verwendung in einem Bedienelement einer Klimaanlage eines Kraftfahrzeuges.

## Patentansprüche

1. Funktionsanzeigenbeleuchtungsvorrichtung, insbesondere für ein Bedienelement einer Klimaanlage eines Kraftfahrzeuges, mit mindestens einer Lichtquelle (12) sowie einer Mehrzahl von Lichtleitelementen (20,26), die jeweils einen Lichteintritt (38) und einen Lichtaustritt (32) aufweisen und Licht der mindestens einen Lichtquelle (12) einem von der mindestens einen Lichtquelle beabstandeten Funktionsanzeigeort zuführen, **dadurch gekennzeichnet, dass** die Lichtleitelemente (20,26) mechanisch miteinander verbunden sind.

2. Funktionsanzeigenbeleuchtungsvorrichtung nach Anspruch 1, **dadurch gekennzeichnet, dass** jedem Lichtleitelement eine Lichtquelle zugeordnet ist.

3. Funktionsanzeigenbeleuchtungsvorrichtung nach Anspruch 1, **dadurch gekennzeichnet, dass** die Lichtleitelemente (20,26) einstückig miteinander verbunden sind.

4. Funktionsanzeigenbeleuchtungsvorrichtung nach Anspruch 1, 2 oder 3, **dadurch gekennzeichnet, dass** zwischen jeweils zwei Lichtleitelementen (20,26) ein Abstandselement (22) vorgesehen ist, welches nicht der Lichtleitung dient.

5. Funktionsanzeigenbeleuchtungsvorrichtung nach Anspruch 4, **dadurch gekennzeichnet, dass die** Lichtleitelemente (20,26) und die Abstandselemente (22) aus unterschiedlichen Werkstoffen gebildet sind.

6. Funktionsanzeigenbeleuchtungsvorrichtung nach Anspruch 5, **dadurch gekennzeichnet, dass** die Abstandselemente (22) aus einem oder mehreren lichtundurchlässigen Werkstoff(en) bestehen.

7. Funktionsanzeigenbeleuchtungsvorrichtung nach einem der Ansprüche 4 bis 6, **dadurch gekennzeichnet, dass** die Abstandselemente (22) mechanisch miteinander verbunden sind.

8. Funktionsanzeigenbeleuchtungsvorrichtung nach einem der vorhergehenden Ansprüche, insbesondere nach Anspruch 1, **dadurch gekennzeichnet, dass** die Lichtleitelemente (20,26) als lichtleitende Funktionsprismen (20) ausgebildet sind.

9. Funktionsanzeigenbeleuchtungsvorrichtung nach Anspruch 8, **dadurch gekennzeichnet, dass** die Funktionsprismen (20) aus einem oder mehreren transparenten Werkstoff(en) bestehen.

10. Funktionsanzeigenbeleuchtungsvorrichtung nach Anspruch 8 oder 9, **dadurch gekennzeichnet, dass** die Funktionsprismen (20) derart ausgestaltet sind, dass das Licht der dem jeweiligen Funktionsprisma (20) zugeordneten mindestens einen Lichtquelle (12) mittels optischer Totalreflexion durch das Funktionsprisma (20) geführt ist.

11. Funktionsanzeigenbeleuchtungsvorrichtung nach einem der Ansprüche 8 bis 10, **dadurch gekennzeichnet, dass** die Funktionsprismen (20) derart ausgestaltet sind, dass ein Übertreten von Licht von einem Funktionsprisma (20) in ein anderes Funktionsprisma (20) mittels optischer Totalreflexion verhindert ist.

12. Funktionsanzeigenbeleuchtungsvorrichtung nach einem der vorhergehenden Ansprüche, **dadurch gekennzeichnet, dass** der Lichtaustrittsbereich (32) der Funktionsprismen (20) derart ausgestaltet ist, dass der Lichtaustritt streuend erfolgt.

13. Funktionsanzeigenbeleuchtungsvorrichtung nach einem der vorhergehenden Ansprüche, **dadurch gekennzeichnet, dass** die Lichtaustrittsbereich (32) der Funktionsprismen (20) diskrete Lichtsignaturen auf einer geschlossenen Umfangskontur bilden.
